# EUROPEAN PATENT SPECIFICATION

(11) **EP 1 170 932 B1**
(45) Date of publication and mention of the grant of the patent: **29.03.2006**
(21) Application number: 00401956.8
(22) Date of filing: 06.07.2000
(51) Int. Cl.: H04M 1/57, H04M 1/27

(54) **Audible identification of caller and callee for mobile communication device**
Akustische Identifizierung des Anrufers und des Angerufenes für mobiles Kommunikationsgerät
Identification vocal de l'appelant et de l'appelé pour dispositif de communication mobile

(43) Date of publication of application: 09.01.2002
(73) Proprietor: TEXAS INSTRUMENTS FRANCE, 06271 Villeneuve Loubet Cédex (FR); TEXAS INSTRUMENTS INCORPORATED, Dallas, TX 75251 (US)
(72) Inventor: Maquaire, Fanny, 06000 Nice (FR); Lefaucheur, Laurent, 06700 St Laurent du Var (FR)
(74) Representative: Jacobson, Claude

(56) References cited:
- WO-A-99/45687
- DE-A- 19 832 069
- GB-A- 2 268 663
- US-A- 5 550 900
- US-A- 5 583 919
- US-A- 5 826 199

## Description

### BACKGROUND OF THE INVENTION

### 1. TECHNICAL FIELD

This invention relates in general to telecommunications and, more particularly, to caller identification for mobile communications devices.

### 2. DESCRIPTION OF THE RELATED ART

For many years, the communications industry has improved the functionality of the telephone system. New services, such as Caller ID, Call Waiting, and Voice Activated Dialing are examples of functions that have been added to the phone system to improve the quality of communications. In addition to new functionality, mobile communication devices have evolved to provide communication resources apart from a wireline connection.

Because of the cost of wireless communications, many users desire to screen calls, i.e., they only answer calls from certain people. Most mobile communications systems provide Caller ID functions to mobile phones to aid with screening. With Caller ID, the name of the calling party is presented on the phone's display. This requires the user to look at the phones display to identify the caller. This can be very inconvenient if the phone is not located in the immediate vicinity of the called party. If the called party is operating a vehicle when the call arrives, viewing the phone's display can be dangerous.

To reduce this risk, some mobile phones provide a distinctive ring that can be associated with groups of telephone numbers. For example, a first ring type could be associated with number of co-workers, a second ring type could be associated with family members, and a third ring type could be associated with clients. However, it is not practical to provide different type ring types for each caller, because it would be impossible to remember the assoaations for more than a few people.

In addition, some mobile communication device such as described in documents GB 2 268 663, US 5,583,919 and DE 198 320 69, comprises a voice synthesizing means producing pre-recorded voice signal corresponding to the telephone number of the call originator.

Besides, documents WO 99/45687 describes a mobile communication device that translates vocally intoned phone numbers into machine readable digits and characters which can be used as the basis for subsequent redial.

However, none of these devices provides a communication device able to play the associated audio files in response to a match between an audio input from a user and one of templates, the audio file being also played when the communication device receives an incoming telephone call having a telephone number recorded in the database, and which does not require a large memory and additional power consumption.

### BRIEF SUMMARY OF THE INVENTION

The present invention provides a mobile communications device comprising :
- a database of telephone numbers, one or more of the telephone numbers associated with respective voice templates ; and
- voice activated dialing circuitry for identifying a match between an audio input from a user and one of templates, characterized in that
- the database of telephone numbers comprises further audio files associated with the respective telephone numbers, and in that
- the device comprises a caller identification circuitry for detecting an originating telephone number associated with an incoming telephone call and, if said originating telephone number is associated with an audio file, playing the associated audio file, and in that
- the voice activated dialing circuitry is adapted to dial one of the telephone numbers and to play the associated audio file in response to the match between the audio input and one of the templates, and in that
- the voice activated dialing circuitry and the caller identification circuitry are adapted to access the audio files and the associated telephone numbers in said database of telephone numbers.

The present invention provides significant advantages over the prior art. First, it allows for an audible indication of the calling party for the most frequently used numbers. Second, the capability for audible indication, in the user's own voice, can be accomplished without additional memory, since the audio files are shared with the voice activated dialing function. Accordingly, the additional power and cost associated with the audible caller identification function is minimal.

### BRIEF DESCRIPTION OF THE SEVERAL VIEWS OF THE DRAWINGS

For a more complete understanding of the present invention, and the advantages thereof, reference is now made to the following descriptions taken in conjunction with the accompanying drawings, in which:
Figure 1 illustrates a perspective view of a mobile communications device;
Figure 2 illustrate a block diagram of the mobile communications device of Figure 1 with audible caller identification circuitry;
Figure 3 illustrates a functional block diagram of the operation of Figure 2 with respect to audible caller identification and voice activated dialing; and
Figure 4 illustrates a flow diagram illustrating the operation of an audible caller identification task.

### DETAILED DESCRIPTION OF THE INVENTION

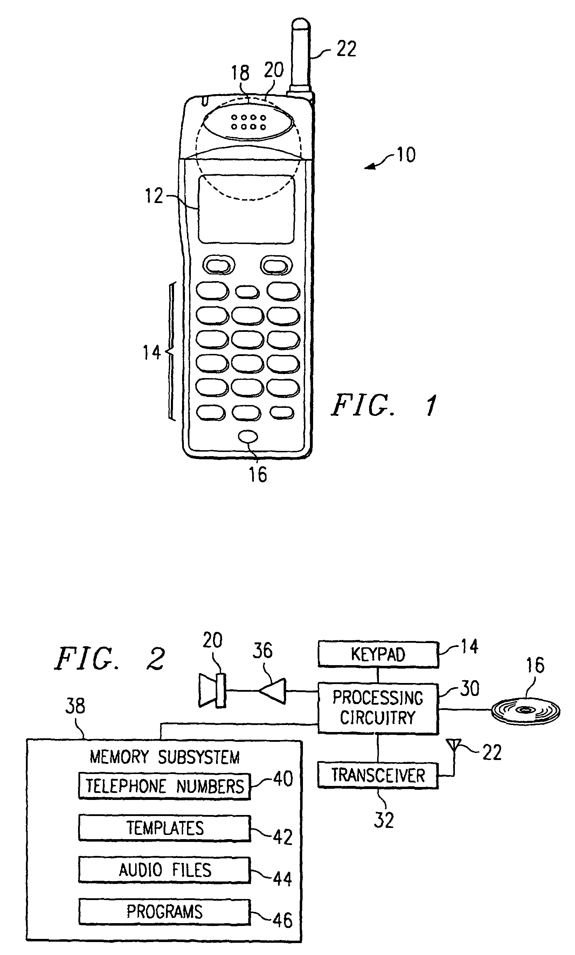

The present invention is best understood in relation to Figures 1 - 4 of the drawings, like numerals being used for like elements of the various drawings.

Figure 1 illustrates a mobile communication device for providing wireless communications. The mobile communication device 10 of Figure 1 could be, for example, a cellular phone, smart phone, satellite phone, portable computer or a PDA (personal digital assistant) with wireless communications capabilities. The overall look of the device 10 could vary according to its capabilities; however, most mobile communication devices will have similar attributes: a display 12, an input keypad 14 (which may be integrated with the display 12 using a touch screen), a microphone 16, a conversation speaker 18 (for audio when pressed to the user's ear), a loudspeaker/ringer 20, and an antenna 22.

In operation, the mobile communications device 10 has both voice activated dialing capabilities and audible caller identification capabilities. For the voice activated dialing, the internal circuitry of the mobile communications device 10 stores information used for voice activated dialing in a memory subsystem (see Figure 2). The information stored by the mobile communications device 10 includes a telephone number database (storing a plurality of frequently called numbers), a voice template database (storing voice templates used to recognize an utterance by the user indicative of a particular telephone number), and an audio file database (for confirmation of a voice dialed number), typically in the users own voice).

When a user creates a new entry for the voice activated dialing system, he or she speaks the designation for the new number (such as "John", "work", or "home") and enters the number, either by speaker independent voice recognition, or by using the telephone keypad. The spoken designation is stored as an audio file (such as a *.wav file) and a template is made from the audio file; this template is used later for speech recognition. For each voice activated dialing entry, the telephone number, template and audio file are linked.

The user may call any entry on the voice dialing list by speaking "Call" (or another suitable command) and the designation. Accordingly, "call home" would result in the telephone number associated with "home" being dialed. To identify the desired telephone number, the voice dialing circuitry parses the utterance (i.e., separates "call" and "home") and compares the stored templates with the designation portion of the utterance (i.e., "home"). Using techniques well known in the art, the designation portion of the utterance is matched to one of the templates, typically by assigning a score to each comparison. If the comparison with the best score meets a certain threshold, a match occurs, and the phone number and audio file associated with the matching template are retrieved. Prior to dialing, however, the audio file associated with the matching template is played to the user as a confirmation. Thus, if the user voice dials using "call John" and the mobile communications device 10 responds with "calling Jean" (where "Jean" is the audio file associated with the errantly matched template), the user can cancel the phone call before the connection is made. The voice dialing database could be used for other commands as well, such as "page John", depending upon the capabilities of the mobile communications device 10.

The present invention uses the same audio files created for voice activated dialing for caller identification. On an incoming call, the mobile communications device 10 receives data indicating the originating telephone number. This information is compared to the telephone numbers stored in the voice activated dialing database. If there is a match, the audio file associated with that number is retrieved and played. Accordingly, the user receives an audible indication of the calling party prior to answering the phone.

Figure 2 illustrates a basic block diagram showing the circuitry used in the voice activated dialing and the audible caller identification functions. Processing circuitry (typically, a digital signal processor, generally referred to as a "DSP" or a multiple microprocessor/DSP system) 30 is coupled to a transceiver 32, memory subsystem 38, keypad 14, microphone 16, and audio output circuitry 36. Output circuitry 36 is coupled to speaker 20. Antenna 22 is coupled to transceiver 32. Memory subsystem 38 includes locations for telephone numbers 40, templates 42, audio files 44 and programs 46. It should be noted that other data would also be stored in memory subsystem 38.

Memory subsystem 38 may include memory internal to processing circuitry 30, external to processing circuitry 30, or a combination of internal and external memory. Processing circuitry 30 may receive data and commands through keypad 14, microphone 16 (using speaker dependent and/ or speaker independent voice recognition), and from telecommunications signals via transceiver 32.

During operation of the mobile communications device 10, the processing circuitry will execute a number of tasks. For example, the processing circuitry will be monitoring inputs from the keypad 14, microphone 16 and transceiver 32. If, for example, a number is dialed using the keypad, the processing circuitry will accumulate numbers from the keypad 14, and initiate a connection via one or more base stations. Similarly, a voice input via the microphone would be monitored via a speech recognition task to determine whether a command, such as "call", was being issued. If so, the designated party would be determined using speech recognition, and the telephone number would be retrieved from memory subsystem 38 using a voice activated dialing task.

Processing circuitry 30 also monitors transceiver 32 for incoming calls directed to the mobile communications device 10. When such a call is received, the originating number is received using typical caller identification techniques. The originating number is compared to numbers in the telephone number database 40. If there is a match, the associated audio file is played through speaker 20 and the information is presented on display 12.

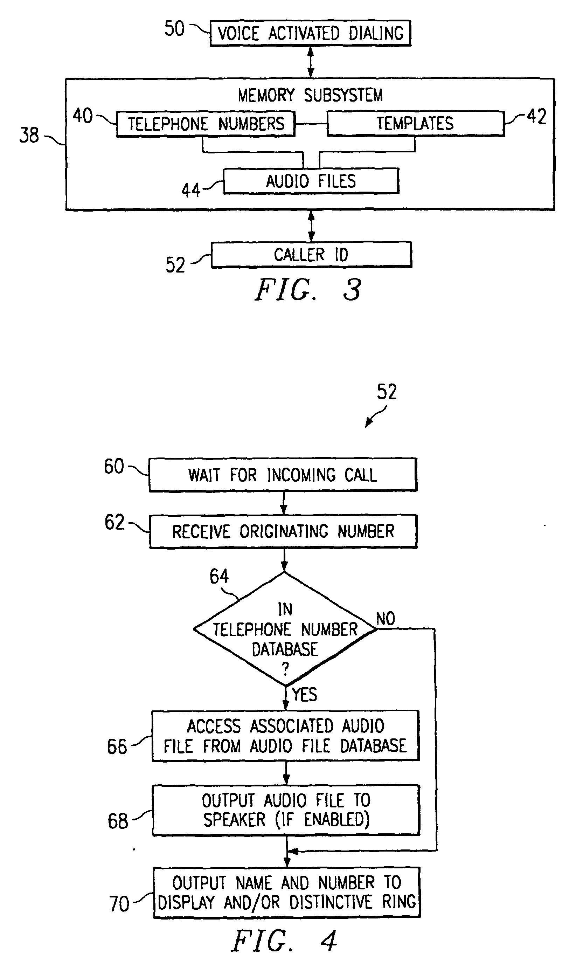

Figure 3 illustrates a block diagram showing the interaction between the voice activated dialing task 50 and the audible caller identification task 52. Both the voice activated dialing task 50 and the caller identification task 52 access the audio files database 44 and the telephone numbers database 40.

Figure 4 illustrates a block diagram of the audible caller identification task 52. In block 60, the task 52 waits for an incoming call directed to the mobile communications device 10. When an incoming call is received, the originating number is derived from the data stream in block 62. The originating number is compared to numbers in the telephone number database 40 used for voice activated dialing. If there is a match in decision block 64, the audio file associated with the matching telephone number is accessed from the audio file database 44. This audio file is played to the user in block 68, if the feature is enabled (in many circumstances, the user will not want the name to be audibly output, so the feature may be disabled by the user). In block 70, the name and number are visually displayed to the user.

In addition to playing the audio file from the audio file database, the processing circuitry 30 may also play an accompanying audio file, such as "you have a call from" or "is calling". Accordingly, the complete audio output from the caller identification task could be "you have a call from home" or "john is calling." The accompanying recording could synthesized speech or recorded by the user.

If, in decision block 64, the originating number is not found in the telephone database 40, then the name and number is output on the display 12 without playing the audio file. Additionally, or in the alternative, a distinctive ring could be played, where the distinctive ring indicates a group of one or more telephone number associated with the calling party.

The present invention provides significant advantages over the prior art. First, it allows for an audible indication of the calling party for the most frequently used numbers. Second, the capability for audible indication, in the user's own voice, can be accomplished without additional memory, since the audio files are shared with the voice activated dialing function. Accordingly, the additional power and cost associated with the audible caller identification function is minimal.

Although the Detailed Description of the invention has been directed to certain exemplary embodiments, various modifications of these embodiments, as well as alternative embodiments, will be suggested to those skilled in the art. The invention encompasses any modifications or alternative embodiments that fall within the scope of the Claims.

## Claims

1. A mobile communications device (10) comprising:
- a database (38) of telephone numbers (40), one or more of the telephone numbers (40) associated with respective voice templates (42) ; and
- voice activated dialing circuitry (50) for identifying a match between an audio input from a user and one of templates (42),
**characterized in that** :
- the database (38) of telephone numbers (40) comprises further audio files (44) associated with the respective telephone numbers (40), and **in that**
- the device (10) comprises a caller identification circuitry (52) for detecting an originating telephone number (40) associated with an incoming telephone call and, if said originating telephone number (40) is associated with an audio file (44), playing the associated audio file (44), and **in that**
- the voice activated dialing circuitry (50) is adapted to dial one of the telephone numbers (40) and to play the associated audio file (44) in response to the match between the audio input and one of the templates (42), and **in that**
- the voice activated dialing circuitry (50) and the caller identification circuitry (52) are adapted to access the audio files (44) and the associated telephone numbers (40) in said database (38) of telephone numbers (40).

2. The mobile communications device of claim 1 and further comprising a display (12) for displaying name associated with a telephone caller.

3. The mobile communications device of claim 2 wherein the display (12) further displays said originating telephone number (40).

4. The mobile communications device of claim 1 wherein said caller identification circuitry (52) further plays a distinctive ring associated with said originating telephone number (40) if the originating telephone number (40) is not associated with an audio file (44).

5. The mobile communications device of claim 1 wherein said audio files (44) are recordings of the user's voice.

6. The mobile communications device of claim 1 wherein said mobile communications device (10) is a cellular telephone.

7. The mobile communications device of claim 1 wherein said mobile communications device (10) is a smart phone.

8. The mobile communications device of claim 1 wherein said mobile communications device (10) is a personal digital assistant.

9. The mobile communications device of claim 1 wherein said mobile communications device (10) is a portable computer.

10. A method of interfacing with a mobile communications device, comprising the steps of:
- storing frequently called numbers (40) in a telephone number database (38), one or more of the telephone numbers (40) in said telephone number database (38) associated with respective voice templates (42) ;
- receiving an audio input from a user for identifying a match between said audio input and one of templates (42),
**characterized in that** it further comprises the following steps :
- storing audio files (44) associated with the respective telephone numbers (40) of the a telephone number database,
- detecting (64) an originating telephone number (40) associated with an incoming telephone call and, if said originating telephone number (40) is associated with an audio file (44), playing the associated audio file (44),
- dialing one of the telephone numbers (40) and playing the associated audio file (44) in response to the match between the audio input and one of the templates (42),
- accessing the audio files (44) and the associated telephone numbers (40) in said database (38) of telephone numbers (40) during the steps of detecting and dialing.

11. The method of claim 10 and further comprising the step of displaying name associated with a telephone caller.

12. The method of claim 11 and further comprising the step of displaying said originating telephone number (40).

13. The method of claim 10 and further comprising the step of playing a distinctive ring associated with said originating telephone number (40) if the originating telephone number (40) is not associated with an audio file (44).

14. The method of claim 10 wherein said audio files (44) are recordings of the user's voice.

## Patentansprüche

1. Mobilkommunikationsvorrichtung (10), mit:
- einer Datenbank (38) für Telephonnummern (40), wobei einer oder mehreren der Telephonnummern (40) jeweilige Sprachschablonen (42) zugeordnet sind; und
- einer sprachaktivierten Wählschaltungsanordnung (50) zum Identifizieren einer Übereinstimmung zwischen einer Audioeingabe von einem Anwender und einer der Schablonen (42),
**dadurch gekennzeichnet, dass**:
- die Datenbank (38) für Telephonnummern (40) ferner Audiodateien (44) umfasst, die den jeweiligen Telephonnummern (40) zugeordnet sind, und dass
- die Vorrichtung (10) eine Anruferidentifizierungs-Schaltungsanordnung (52) umfasst, um eine einem ankommenden Telephonanruf zugeordnete anrufende Telephonnummer (40) zu erfassen und um, falls der anrufenden Telephonnummer (40) eine Audiodatei (44) zugeordnet ist, die zugeordnete Audiodatei (44) abzuspielen, und dass
- die sprachaktivierte Wählschaltungsanordnung (50) so beschaffen ist, dass sie in Reaktion auf die Übereinstimmung zwischen der Audioeingabe und einer der Schablonen (42) eine der Telephonnummern (40) wählt und die zugeordnete Audiodatei (44) abspielt, und dass
- die sprachaktivierte Wählschaltungsanordnung (50) und die Anruferidentifizierungs-Schaltungsanordnung (52) so beschaffen sind, dass sie auf die Audiodateien (44) und auf die zugeordneten Telephonnummern (40) in der Datenbank (38) für Telephonnummern (40) zugreifen.

2. Mobilkommunikationsvorrichtung nach Anspruch 1, die ferner eine Anzeige (12) umfasst, um den einem Telephonanrufer zugeordneten Namen anzuzeigen.

3. Mobilkommunikationsvorrichtung nach Anspruch 2, bei der die Anzeige (12) ferner die anrufende Telephonnummer (40) anzeigt.

4. Mobilkommunikationsvorrichtung nach Anspruch 1, bei der die Anruferidentifizierungs-Schaltungsanordnung (52) ferner einen der anrufenden Telephonnummer (40) zugeordneten anderen Klingelton abspielt, falls die anrufende Telephonnummer (40) keiner Audiodatei (44) zugeordnet ist.

5. Mobilkommunikationsvorrichtung nach Anspruch 1, bei der die Audiodateien (44) Aufzeichnungen der Anwenderstimme sind.

6. Mobilkommunikationsvorrichtung nach Anspruch 1, wobei die Mobilkommunikationsvorrichtung (10) ein Zellentelephon ist.

7. Mobilkommunikationsvorrichtung nach Anspruch 1, wobei die Mobilkommunikationsvorrichtung (10) ein intelligentes Telephon ist.

8. Mobilkommunikationsvorrichtung nach Anspruch 1, wobei die Mobilkommunikationsvorrichtung (10) ein persönlicher digitaler Assistent ist.

9. Mobilkommunikationsvorrichtung nach Anspruch 1, wobei die Mobilkommunikationsvorrichtung (10) ein tragbarer Computer ist.

10. Verfahren zum Bilden einer Schnittstelle mit einer Mobilkommunikationsvorrichtung, das die folgenden Schritte umfasst:
- Speichern häufig angerufener Nummern (40) in einer Telephonnummern-Datenbank (38), wobei einer oder mehreren der Telephonnummern (40) in der Telephonnummern-Datenbank (38) jeweilige Sprachschablonen (42) zugeordnet sind;
- Empfangen einer Audioeingabe von einem Anwender, um eine Übereinstimmung zwischen der Audioeingabe und einer der Schablonen (42) zu festzustellen,
**dadurch gekennzeichnet, dass** es ferner die folgenden Schritte umfasst:
- Speichern von Audiodateien (44), die den jeweiligen Telephonnummern (40) der Telephonnummern-Datenbank zugeordnet sind,
- Erfassen (64) einer einem ankommenden Telephonanruf zugeordneten anrufenden Telephonnummer (40) und, falls der anrufenden Telephonnummer (40) eine Audiodatei (44) zugeordnet ist, Abspielen der zugeordneten Audiodatei (44),
- Wählen einer der Telephonnummern (40) und Abspielen der zugeordneten Audiodatei (44) in Reaktion auf die Übereinstimmung zwischen dem Audioeingang und einer der Schablonen (42),
- Zugreifen auf die Audiodateien (44) und die zugeordneten Telephonnummern (44) in der Datenbank (38) für Telephonnummern (40) während der Schritte des Erfassens und des Wählens.

11. Verfahren nach Anspruch 10, das ferner den Schritt des Anzeigens des einem Telephonanrufer zugeordneten Namens umfasst.

12. Verfahren nach Anspruch 11, das ferner den Schritt des Anzeigens der anrufenden Telephonnummer (40) umfasst.

13. Verfahren nach Anspruch 10, das ferner den Schritt des Abspielens eines der anrufenden Telephonnummer (40) zugeordneten anderen Klingeltons umfasst, falls die zugeordnete Telephonnummer (40) keiner Audiodatei (44) zugeordnet ist.

14. Verfahren nach Anspruch 10, bei dem die Audiodateien (44) Aufzeichnungen der Anwenderstimme sind.

## Revendications

1. Dispositif de communication mobile (10) comprenant :
- une base de données (38) de numéros de téléphone (40), un ou plusieurs des numéros de téléphone (40) associés à des modèles vocaux respectifs (42) ; et
- un ensemble de circuits de numérotation à commande vocale (50) pour identifier une concordance entre une entrée audio d'un utilisateur et un des modèles (42),
**caractérisé en ce que** :
- la base de données (38) de numéros de téléphone (40) comprend en outre des fichiers audio (44) associés aux numéros de téléphone respectifs (40), et **en ce que**
- le dispositif (10) comprend un ensemble de circuits d'identification de l'appelant (52) pour détecter un numéro de téléphone d'origine (40) associé à un appel téléphonique entrant et, si ledit numéro de téléphone d'origine (40) est associé à un fichier audio (44), lire le fichier audio associé (44), et **en ce que**
- l'ensemble de circuits de numérotation à commande vocale (50) est adapté pour composer un des numéros de téléphone (40) et pour lire le fichier audio associé (44) en réponse à la concordance entre l'entrée audio et un des modèles (42), et **en ce que**
- l'ensemble de circuits de numérotation à commande vocale (50) et l'ensemble de circuits d'identification de l'appelant (52) sont adaptés pour accéder aux fichiers audio (44) et aux numéros de téléphone associés (40) dans ladite base de données (38) de numéros de téléphone (40).

2. Dispositif de communication mobile selon la revendication 1 et comprenant en outre un afficheur (12) pour afficher le nom associé à un appelant téléphonique.

3. Dispositif de communication mobile selon la revendication 2, dans lequel l'afficheur (12) affiche en outre ledit numéro de téléphone d'origine (40).

4. Dispositif de communication mobile selon la revendication 1, dans lequel ledit ensemble de circuits d'identification de l'appelant (52) joue en outre une sonnerie distinctive associée audit numéro de téléphone d'origine (40) si le numéro de téléphone d'origine (40) n'est pas associé à un fichier audio (44).

5. Dispositif de communication mobile selon la revendication 1, dans lequel lesdits fichiers audio (44) sont des enregistrements de la voix de l'utilisateur.

6. Dispositif de communication mobile selon la revendication 1, dans lequel ledit dispositif de communication mobile (10) est un téléphone cellulaire.

7. Dispositif de communication mobile selon la revendication 1, dans lequel ledit dispositif de communication mobile (10) est un téléphone intelligent.

8. Dispositif de communication mobile selon la revendication 1, dans lequel ledit dispositif de communication mobile (10) est un assistant numérique personnel.

9. Dispositif de communication mobile selon la revendication 1, dans lequel ledit dispositif de communication mobile (10) est un ordinateur portable.

10. Procédé d'interfaçage avec un dispositif de communication mobile, comprenant les étapes consistant à :
- stocker des numéros fréquemment appelés (40) dans une base de données de numéros de téléphone (38), un ou plusieurs des numéros de téléphone (40) dans ladite base de données de numéros de téléphone (38) associés à des modèles vocaux respectifs (42) ;
- recevoir une entrée audio d'un utilisateur pour identifier une concordance entre ladite entrée audio et un des modèles (42),
**caractérisé en ce qu'**il comprend en outre les étapes suivantes :
- stocker des fichiers audio (44) associés aux numéros de téléphone respectifs (40) d'une base de données de numéros de téléphone,
- détecter (64) un numéro de téléphone d'origine (40) associé à un appel téléphonique entrant, si ledit numéro de téléphone d'origine (40) est associé à un fichier audio (44), lire le fichier audio associé (44),
- composer un des numéros de téléphone (40) et lire le fichier audio associé (44) en réponse à la concordance entre l'entrée audio et un des modèles (42),
- accéder aux fichiers audio (44) et aux numéros de téléphone associés (40) dans ladite base de données (38) de numéros de téléphone (40) durant les étapes de détection et de composition.

11. Procédé selon la revendication 10 et comprenant en outre l'étape consistant à afficher le nom associé à un appelant téléphonique.

12. Procédé selon la revendication 11 et comprenant en outre l'étape consistant à afficher ledit numéro de téléphone d'origine (40).

13. Procédé selon la revendication 10 et comprenant en outre l'étape consistant à jouer une sonnerie distinctive associée audit numéro de téléphone d'origine (40) si le numéro de téléphone d'origine (40) n'est pas associé à un fichier audio (44).

14. Procédé selon la revendication 10, dans lequel lesdits fichiers audio (44) sont des enregistrements de la voix de l'utilisateur.
